# EUROPEAN PATENT APPLICATION

(11) **EP 1 961 558 A1**
(43) Date of publication of application: **27.08.2008**
(21) Application number: 07003900.3
(22) Date of filing: 26.02.2007
(51) Int. Cl.: B32B 27/32

(54) **Laminated multilayer films**

(71) Applicant: Borealis Technology Oy, 06201 Porvoo (FI)
(72) Inventor: Dasgupta, Chanchal, Andheri (West), Mumbai 400101 (IN)
(74) Representative: Grünecker, Kinkeldey, Stockmair & Schwanhäusser Anwaltssozietät

(57) **Abstract**

The present invention provides laminated multilayer films comprising a multilayer film laminate on a substrate, wherein said multilayer film laminate comprises a multimodal polyethylene (PE) composition. The invention is further directed to a process for producing such laminated multilayer films as well as to articles comprising said laminated multilayer films.

## Description

This invention relates to laminated multilayer films comprising a multilayer film laminate on a substrate, wherein said multilayer film laminate comprises a multimodal polyethylene (PE) composition. The invention is further directed to a process for producing such laminated multilayer films as well as to articles comprising said laminated multilayer films.

### Background art

Multimodal polyethylene polymers are feasibly processable due to broadened molecular weight distribution. Therefore multimodal PE is a desirable material for many end applications including film applications. Unfortunately, the increase in molecular weight and broadening of molecular weight distribution in order to improve the processability have an adverse effect on optical properties, which is a drawback e.g. in film applications of multimodal PE polymers. The resulting films are normally hazy and have impaired see-through clarity.

PE produced by low-pressure polymerization using metallocene catalysts (mPE) has improved optical properties compared to PE produced in low-pressure polymerization using a Ziegler Natta catalyst (znPE).

In high transparent film applications znPE, and often also mPE, is typically blended with a low-density polyethylene (LDPE) produced by high-pressure polymerization (HP) and known to provide good optical properties to the final films.

Also the increase of polymer density normally has an adverse effect on the optical properties. Therefore, znPE or mPE materials that are used in the above-mentioned high transparent blends, have conventionally been linear low-density znPE and mPE materials (znLLDPE and mLLDPE). Unfortunately, the decrease in density in turn can compromise the mechanical properties of the final film. One solution to improve the mechanical properties is to use multilayer films with differing layer materials. In such multilayer film applications, transparency is conventionally achieved by using transparent film layers, e.g. above mentioned blends with LLDPE and LDPE.

Also in the field of film lamination, transparent laminated films have conventionally been produced by laminating transparent mono- or multilayered film laminates on a transparent substrate. Thus in transparent multilayer film laminates both the film laminate and the substrate have typically a high clarity (low haze) already before lamination.

It is a continuous need for further polymer material combinations for laminated films, particularly for film laminates, that are more suitable or tailored for varying end applications to meet the increasing demands of film producers and/or end users.

### The summary of the Invention

It is an object of the present invention to provide a further laminated multilayer film with an alternative film layer combination with advantageous optical properties.

It is another object of the present invention to provide an alternative multilayer film laminate for laminated multilayer films. The multilayer film laminate of the invention broadens the window of usable layer solutions in the field of laminated film applications, particularly in transparent laminated multilayer film applications.

Furthermore the invention provides a process for producing laminated multilayer films. Also articles comprising said laminated multilayer films and the preparation process thereof are provided.

### Description of invention

The inventor has surprisingly found that when a matt surface of a film laminate is laminated on a substrate, the matt property of that layer unexpectedly has no effect on the overall optical properties of the resulting laminated multilayer film. Accordingly, it was found that a multilayer film laminate, wherein a layer side which is laminated to a substrate, i.e. the lamination side, has a matt surface, provides a final laminated multilayer film with excellent overall transparency.

The above effect achieved with the present film laminate with hazy lamination side, i.e. no adverse effect on optical properties of the final laminated film, is surprising in view of the prior art practice.

Furthermore, the matt film layer of the multilayer film laminate of the invention may preferably also contribute beneficially to the mechanical properties of the final laminated multilayer film of the invention, as described later below.

The matt surface property of the film laminate of the invention can be defined by two alternative ways, i.e. by end property of said matt layer or, respectively, by the compositional properties of the polymer of said matt layer. Both alternatives, i.e. both alternative technical features, define equally applicable product parameters for describing the present invention, which parameters are well known, generally accepted parameters.

Thus according to the First alternative, the invention is directed to a laminated multilayer film which comprises a multilayer film laminate (i) and a substrate (ii), wherein the multilayer film laminate (i) comprises at least two layers, an inner layer (A) and an outer layer (C), characterized in that
- said inner layer (A) comprises a multimodal polyethylene composition having a density of 940 kg/m³ or less, molecular weight distribution. Mw/Mn of at least 8 and a MFR₂ of 0.01 to 20 g/10 min when determined according to ISO 1133 (at 190 °C and 2.16 kg load), and in that
- said inner layer (A) of the multilayer film substrate (i) is in contact with a surface of the substrate (ii). Preferably, layer (A) and layer (C) comprise different polymer compositions.

The end property of a matt surface can also be expressed e.g. as a high haze value determined according to ASTM D 1003 as defined below.

According to the Second alternative, the invention is directed to a laminated multilayer film which comprises a multilayer film laminate (i) and a substrate (ii), wherein the multilayer film laminate (i) comprises at least two layers, an inner layer (A) and an outer layer (C), characterized in that
- said inner layer (A) comprises a polymer composition which, when produced to a blown film consisting of said polymer composition and having a film thickness of 40 µm, has a haze value of at least 30%, preferably at least 40%, as determined according to ASTM D 1003,
- said inner layer (A) of the multilayer film laminate (i) is in contact with a surface of the substrate (ii). Preferably, layer (A) and layer (C) comprise different polymer compositions. The film sample of said polymer composition of layer (A) used for the haze measurement was prepared as described below under "Film Sample Preparation".

Both alternatives independently define the laminated film of the invention. The unifying feature is layer (A) which in both alternative definitions provides a matt property to said layer and the unexpected effect discussed above.

The below description of the invention including preferable property definitions, subgroups and embodiments apply independently for both definitions of the invention. Naturally, the first and second alternatives can be combined in any order to provide one of the two dependent on the other.

The expressions "laminated multilayer film", "film laminate" and "substrate" are widely used and well known in the art and mean that a multilayer film laminate (i) and a substrate (ii) are formed independently in separate process step, an outer layer surface of the film laminate (i) and an outer layer surface of substrate (ii) are contacted together and adhered thereon by any lamination techniques in a manner well known in the art, including, without limiting to, an adhesive lamination or a sandwich lamination. The sandwich lamination includes the option of using heat during a lamination step e.g. based on the melting or softening temperature of layer (A) or of a separately added melt web, such as EVA or LDPE melt web.

Furthermore, the expression "said inner layer (A) of the multilayer film substrate (i) is in contact with a surface of the substrate (ii)" covers the option to use an adhesive or melt web between the layer (A) and the surface of said substrate (ii).

The laminated multilayer film of the invention" is abbreviated herein as "Laminated Film".

Preferably, the Laminated Film is according to the First alternative.

The multimodal polyethylene composition present in layer (A) of said first Laminated Film alternative has preferably, when produced to a blown film consisting of said polymer composition and having a film thickness of 40 µm, a haze value of at least 30%, preferably at least 40%, more preferably at least 50% as determined according to ASTM D 1003. The film sample of said polyethylene composition used in the haze measurement was prepared as described below under "Film Sample Preparation".

The below detailed description of suitable film materials and any subgroups, preferred ranges and embodiments apply independently for both alternatives.

Preferably, the lamination layer (A) has a haze value of at least 30%, preferably at least 40%, in some embodiment even at least 50% may be preferred, when determined according to ASTM D 1003 using a blown film sample. The preferable layer thickness distribution (%) is defined in detail below under "Film properties". E.g. C/A-layer structure of film laminate (i) is typically of (10-90%)/(90-10%), preferably (20-80%) /(80-20%), more preferably (33-67%)/(67-33%) calculated from the final multilayer film laminate (i) thickness of 100%. Although herein a 40 µm film sample consisting of the polymer composition of layer (A) was used for the determination, however it is to be understood that the layer thickness is not limited thereto, but can be varied, preferably within the below given thickness distribution range.

In one preferable embodiment the polymer composition of layer (C) of the film laminate (i), when produced to a film consisting of said polymer composition and having a film thickness of 40 µm, has a haze value of 30% or less, more preferably 20% or less, when determined according to ASTM D 1003. In some end uses applications, such as in highly transparent Laminated Film applications, the polymer composition of layer (C) may have a haze value of even 15% or less when determined as described above. The film sample used for haze determination was a blown Film Sample of film laminate (i) prepared is described under "Film Sample Preparation".

In the above embodiment, wherein layer (C) of the multilayered film laminate (i) has a transparent surface expressed as lower haze value as defined above and layer (A) has a matt surface as defined with one or both of the above two alternatives or with claim 1 and/or claim 2, said laminate (i) provides a high transparency when laminated to a transparent substrate (ii).

Accordingly, in a preferable transparent Laminated Film embodiment, the film laminate (i) has a haze value of at least 35%, preferably at least 40%, when determined according to ASTM D 1003. The preferable thickness of film laminate (i) is defined in detail below under "Film properties" and may preferably range within 10 to 300 µm, preferably 15 to 250 µm, more preferably 25 to 100 µm. Although herein a blown Film Sample of film laminate (i) with a thickness of 40 µm was used, but the laminate (i) thickness can be varied, preferably within the below given thickness range.

In transparent Laminated Film embodiments the final Laminated Film has preferably a haze value of less than 20%, preferably less than 15%, in some embodiment even 12% or less, as determined according to ASTM D 1003. The preferable thickness of Laminated Film is defined in detail below under "Film properties" and may e.g. be at least of at least 25 µm, preferably of at least 45 µm. The upper limit of Laminated Film is not critical and may be e.g. less than 550 µm, e.g. less than 300 µm, typically less than 200 µm, preferably less 140 µm. Although herein a Film Sample of Laminated Film of a blown film laminate (i) laminated to a substrate (ii) with a total thickness of film laminate 50µm was used, however it is to be understood that the thickness is not limited thereto, but can be varied, preferably within the below given thickness range. The preparation of Film Sample of Laminated Film is described under "Film Sample Preparation".

Furthermore, in high transparency embodiments, the invention can provide a Laminated Film having a haze value of even 8% or less, e.g. between 4 to 8%, when measured according to ASTM D 1003.

Depending on the end use application, said layer (C) and/or said substrate (ii) may optionally have a high gloss value. Thus the invention provides as a high transparency embodiment a Laminated Film which preferably has a gloss value of at least 60%, or even 70% or more, or if high transparency is desired, even of 75% or more, when determined according to ASTM D 2457 measured at angle 60° from a layer (C) side of Laminated Film. Again the preferable thickness ranges of Laminated Film are described below under "Film properties". Although herein a Laminated Film Sample with a thickness of 50 µm was used for the determination, however it is to be understood that the thickness is not limited thereto, but can be varied, preferably within the below given thickness distribution range. The preparation of Film Sample of Laminated Film is described under "Film Sample Preparation".

As already mentioned above, the film layer (A) of the multilayer film laminate may also have a beneficial contribution to the mechanical properties of the Laminated Film. Thus optionally, and preferably, the Laminated Film has excellent mechanical properties expressed i.a. as impact strength determined on dart drop as defined later below under "Determination methods". Without binding to any theory the unexpected transparency properties and the optional advantageous mechanical properties are due to the fusion or bonding property of the matt surface of layer (A).

The invention is further directed to a multilayer film laminate (i) as defined above or below for use in a laminated multilayer film.

The Laminated Film can be used in various end use applications including packaging materials, preferably as packaging material in cosmetic, non-food and food packaging articles for solid or liquid goods.

Accordingly the invention also provides an article, preferably a packaging article comprising the Laminated Film of the invention.

The invention is also directed to a process for preparing a multilayer film laminate (i). Furthermore, the invention concerns a process for preparing a laminated multilayer film. Also a process for producing an article comprising the Laminated Film is provided. The use of Laminated Film as packaging material is further provided.

The matt property provided by layer (A) of the invention defined by the technical features as given in claim 1 or claim 2 is the key of the invention. All the other components and properties of the Laminated Film can be varied and tailored within the scope of claim 1 or claim 2 depending on the intended end use application of the Laminated Film.

The below preferable property ranges and subgroups are given generally for polymer compositions present in layers of multilayer film laminate (i) and in substrate (ii) can naturally be combined in any combination and in any order to define the different embodiments and variants of the invention.

The term "consisting of", if used below in relation to polymer components present in layers of multilayer film laminate (i) and substrate (ii), is meant to exclude only the presence of other polymer components. Thus said term includes the optional presence of additives, e.g. conventional film additives, i.e. each layer independently may contain conventional film additives in conventional amounts, such as antioxidants, UV stabilizers, anti-fogging agents, UV absorbers, IR reflectors, acid scavengers, nucleating agents, anti-blocking agents, slip agents etc., as well as polymer processing agent (PPA). The amount of optional additives is typically less than 5 wt%, e.g. between 0.0001- 3 wt% calculated from the sum (wt%) of additives and polymer components present in a layer.

### Multilayer film laminate (i)

The multilayer film laminate (i) of the invention comprises at least Layers (A) and (C) as defined above.

The layer (A) comprises preferably the multimodal polyethylene composition as defined in the above first alternative. As well known to a person skilled in the polymer field, the polyethylene composition having a density 940 kg/m³ or less may sometimes be defined in the polymer literature as covering i.a. a medium density polyethylene (MDPE) composition and a linear low density ethylene (LLDPE) composition. In this application polyethylene with a density 940 kg/m³ or less is abbreviated shortly as "multimodal LLDPE composition" or "multimodal LLDPE" and it naturally covers polyethylenes within the density range of "MDPE".

More preferably the multimodal LLDPE is copolymer of ethylene with one or more comonomers.

Layer (A) as defined above and below comprises preferably at least a multimodal LLDPE composition and may comprise other polymers, such as a second, different LLDPE composition. Said layer (A) comprises a multimodal LLDPE composition in an amount of at least 50 wt%, preferably at least 70 wt%, more preferably at least 80 wt% of the total amount of the layer (A). Preferably layer (A) consists of one or more, preferably one, multimodal LLDPE composition.

Preferably said multimodal LLDPE composition is obtainable by a polymerization of ethylene with one or more comonomers in the presence of a Ziegler-Natta catalyst (multimodal znLLDPE).

In one preferable embodiment, said layer (A) consists of a multimodal LLDPE, preferably a multimodal znLLDPE.

Further preferably, particularly in transparent Laminated Film embodiments, said layer (A) is unpigmented.

The term "unpigmented" as used in this application in relation to film layer(s) means that the said layer(s) is/are free of any pigments that would decrease the transparency of the final Laminated Film, when present in said layer(s), compared to the same Laminated Film, but without such pigment in said layer(s).

The polymer composition used in layer (C) of film laminate (i) as defined above or below is not critical and can be chosen depending on the demands, e.g. transparency, of the end use application. Preferably, said layer (C) comprises LLDPE which can be unimodal or multimodal LLDPE composition. Moreover, LLDPE can be znLLDPE or LLDPE can be obtainable by polymerization using a single site catalyst (mLLDPE). Both mLLDPE and znLLDPE alternatives are preferable. Also preferably, layer (C) may comprise low-density polyethylene (LDPE) homo- or copolymer composition obtainable by high-pressure polymerization, preferably LDPE homopolymer composition, referred herein as LDPE.

The amount of LLDPE usable in layer (C) typically varies between 0 to 100 wt% of the total amount of layer (C). Layer (C) comprises preferably a blend of LLDPE and LDPE. The amount of LDPE can vary between 0 to 100 wt%. In one embodiment the blend comprises 5 to 15 wt% of LDPE and 85 to 95 wt% of LLDPE. In another alternative embodiment the blend comprises up to 30 wt% of LLDPE. Such blends typically provide a low haze and preferably also high gloss to the layer (C), as well known in the art.

In embodiments wherein a low haze, i.e. good transparency, is desired for the Laminated Film, then the multimodal polyethylene composition present in layer (C) has preferably, when produced to a blown film consisting of said polymer composition and having a film thickness of 40 µm, a haze value of less than 20%, preferably of less than 15%, or in high transparency embodiments, preferably of 12% or less, or even as low as between 4 to 8% may be desired, when determined according to ASTM D 1003. Preferably the layer (C) has a haze value of less than 20%, preferably of less than 15%, or in high transparency embodiments, preferably of 12% or less, or even as low as between 4 to 8% may be desired, when determined according to ASTM D 1003 using a blown film sample. Again, the preferable thickness distribution ranges are described below under "Film properties". Although herein a Film Sample of layer (C) with a thickness of 40 µm was used for the determination, however it is to be understood that the thickness is not limited thereto, but can be varied, preferably within the below given thickness distribution range.

In transparent Laminated Film embodiments in particular, layer (C) preferably consists of the blend of LLDPE and LDPE as defined above.

Multilayer film laminate (i) of the invention may also comprise additional film layers. The additional optional film layers are naturally selected so that they have no adverse effect on the inventive effect achieved with layer (A).

At least in transparent laminated Film embodiments, the film layers, preferably all film layers of multilayer film laminate (i) are unpigmented, i.e. are free of pigments which would have an adverse effect on transparency.

According to one preferable embodiment the multilayer film laminate (i) comprises, in the given layer order,
- an inner layer (A) as defined above or below,
- a core layer (B),
- an outer layer (C) as defined above or below.

Said layer (B) can comprise or consists of the same polymer composition as comprised or consisted of in layer (A) or layer (C).

In one preferable embodiment said layer (B) comprises at least a multimodal LLDPE. In addition to a multimodal LLDPE, layer (B) may comprise also other polymers depending on the end use of the Laminated Film.

Preferably, when said layer (B) comprises a multimodal LLDPE, then said multimodal LLDPE is the same polymer composition as used in layer (A).

Alternatively, layer (B) may comprise LLDPE which is the same LLDPE as in layer (C).

In another preferable embodiment, especially when the Laminated Film with good mechanical properties, such as stiffness, is needed for the end use application, the layers (A), (B) and/or (C) may comprise a high-density polyethylene (HDPE) composition. Preferably, when HDPE is present, then core layer(s), such as layer (B), comprises HDPE.

The amount of HDPE may be e.g. up to 40 wt%, preferably 5 to 30 wt%, such as 10 to 25 wt%. In such embodiments the layer (B) comprises preferably a blend of a LLDPE and a HDPE polymer. The amount of LLDPE being more than 60 wt%, preferably 95 to 70 wt%, more preferably 90 to 75 wt% of the amount of blend. Preferably, layer (B) of this embodiment consists of a blend of a LLDPE and a HDPE in the above given wt% proportions calculated form the total amount of blend (100wt%).

In a further preferable embodiment layer (B) may also contain LDPE in amount of e.g. 5 to 40 wt%, preferably 5 to 20 wt%.

In a further preferable embodiment said layer (B) comprises a LLDPE and LDPE, and optionally HDPE. The amount of LLDPE in such blend is typically at least 50 wt%, preferably at least 60 wt%, such as 65 to 90 wt%. The amount of LDPE in such blend may be e.g. 5 to 40 wt%, preferably 5 to 20 wt%. The amount of HDPE in such blend may be up to 40 wt%, preferably 5 to 30 wt%, such as 10 to 25 wt%. Preferably in this embodiment, layer (B) consists of said blend, which blend is selected from a blend consisting of LLDPE and LDPE and a blend consisting of LLDPE, LDPE and HDPE, in the above given amounts totaling to 100wt%.

If layer (B) comprises or consists of a blend of LLDPE and HDPE, then LLDPE is preferably a multimodal LLDPE, more preferably the same multimodal LLDPE as used in layer (A).

If layer (B) comprises or consists of a blend comprising LDPE and another polymer, then said blend preferably comprises LLDPE and LDPE. Then preferably said LLDPE is the same as defined above and below in relation to layer (C).

The multilayer film laminate (i) may comprise further layers, such as a 5-layer structure, comprising layers (A) and (C) preferably as the outer layers and three "core" layers selected from (A), (C) and (B).

The film of the invention may also contain an adhesive layer, or one or more of the layers of Laminated Film may be surface treated in a manner well known in the art. In a preferred embodiment, the layer (A) and layer (C) as defined above or below, and when present, the further layers, such as layer (B) as defined above or below, are preferably in direct contact with each other, i.e. without any adhesive layer or surface treatment of one or more of the layers.

When a multilayer film laminate (i) of said (A)/(C)-layer structure comprises further layers, then preferably, layers (A) and (C) form the outermost layers of the multilayer film laminate.

The multilayer film laminate (i) of the invention can be produced in any conventional method, preferably said film laminate (i) is a multilayer coextruded film laminate (i), more preferably a blown multilayer coextruded film laminate (i).

The terms "extruded", or respectively, "coextruded" and "coextrudate", as used herein mean well-known film (co)extrusion, preferably blown film (co)extrusion, processes and the product thereof as will be described later below.

### Substrate (ii)

The substrate material of the laminated Film is not critical. Preferably the substrate (ii) is a polymer-based substrate (ii). Furthermore the substrate (ii) can be a monolayer or multilayer substrate. It is also possible that the substrate (ii) is similar or the same as the multilayer film laminate (i).

In case the substrate (ii) is a multilayer film, then in transparent Laminated Film applications the clear layer sides of laminate (i) and substrate (ii) are the outer layers of the final Laminated Film, e.g. C/A/A/C or C/B/A/A/B/C as defined above or below.

In transparent Laminated Film embodiments the substrate (ii) is thus transparent. Such transparent substrate (ii) may be oriented or non-oriented film structure comprising at least one layer comprising, a polyester composition, preferably polyethylene terephthalate composition (PET), polypropylene homo or random copolymer, polyethylene homo or copolymer, or a polyamide polymer. If a non-oriented substrate (ii) film consists of one polymer composition, this is preferably PET.

Alternatively, the substrate (i) may be a bioriented, mono- or multilayer film, such as bioriented polypropylene (BOPP), bioriented polyethylene (BOPE) or bioriented polyamide (BOPA) mono- or multilayer film, or a non-oriented multilayer film having transparent outer layer as the outer layer of the final Laminated Film.

Polyesters, BOPP, BOPE and BOPA usable in the substrate (ii) are very well known and conventional in the film field. These materials can be commercially available or be produced using polymerisation processes and conditions well known in the polymer literature. The orientation/stretching methods for producing BOPP, BOPE and BOPA materials of the invention are also very well known and documented.

In a preferable embodiment the substrate consists of a polyester composition, preferably PET composition.

Since the key of the invention is in the multilayer film laminate (i) the polymer materials suitable for the layers thereof are described in more details below.

### Polymer compositions

The polymer compositions, LLDPE, HDPE and LDPE, if present in the Laminated Film, are defined below generally for all of the layers (A), (C) and the optional layer(s), such as layer (B), of the multilayer film laminate (i) and, if present, for the layer(s) of substrate (ii). Any preferred properties of LLDPE, HDPE and/or LDPE which are particularly suitable for layer (A), (C) or an optional layer(s), such as (B), or for a substrate (ii), are also specified below and represent preferably subgroups and variants of the invention.

### LLDPE composition

Thus the below preferable property ranges and subgroups of LLDPE apply generally for all of layers of the Laminated Film of the invention. They also apply equally for any type of LLDPE used in the Laminated Film including unimodal LLDPE, multimodal LLDPE, znLLDPE and mLLDPE, unless otherwise stated. The given properties and subgroups can naturally be combined in any combination and in any order to define the preferable embodiments and variants of the invention.

The LLDPE may be unimodal or multimodal. LLDPE usable in layer (A) of the invention is preferably a multimodal LLDPE.

LLDPE usable in layer (C) of the invention can be unimodal or multimodal LLDPE, preferably a unimodal LLDPE. Alternatively, multimodal LLDPE may also be used as a layer material for layer (C).

In transparent Laminated Film embodiments, if multimodal LLDPE is used in layer (C), then it is used in blends, preferably in an amount up to 30 wt% based on the total amount of the blend.

By unimodal is meant that the molecular weight profile of the polymer comprises a single peak and is produced by one reactor and one catalyst.

The term "multimodal" means herein, unless otherwise stated, multimodality with respect to molecular weight distribution and includes also bimodal polymer.

Usually, a polyethylene, e.g. LLDPE composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so-called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The multimodal LLDPE used in the present invention comprises a lower weight average molecular weight component (LMW) and a higher weight average molecular weight component (HMW). The LMW component has a lower molecular weight than the higher molecular weight component.

In one preferred embodiment said multimodal LLDPE comprises at least (i) a lower weight average molecular weight (LMW) ethylene homopolymer or copolymer component, and (ii) a higher weight average molecular weight (HMW) ethylene homopolymer or copolymer component. Preferably, at least one of the LMW and HMW components is a copolymer of ethylene with at least one comonomer. It is preferred that at least HMW component is an ethylene copolymer. Alternatively, if one of the components is a homopolymer, then LMW is preferably the homopolymer.

Alternatively, said multimodal LLDPE may comprise further polymer components, e.g. three components being a trimodal LLDPE. Optionally multimodal LLDPE may also comprise e.g. up to 10% by weight of a well known polyethylene prepolymer which is obtainable from a prepolymerization step as well known in the art, e.g. as described in WO9618662. In case of such prepolymer, the prepolymer component is comprised in one of LMW and HMW components, preferably LMW component, as defined above.

Preferably said multimodal LLDPE is bimodal LLDPE comprising said LMW and HMW components and optionally a prepolymerized fraction as defined above.

As mentioned above the layer (A) of the Laminated Film preferably contains a multimodal LLDPE, since the feature of multimodality provides the matt surface of layer (A) and thus the unexpected effect of the invention as explained above.

The other properties of LLDPE in said layer (A) are not critical and can be varied within the scope of the invention depending on the desired end use application.

Moreover, similarly the properties and nature of LLDPE for a layer (C) and optional layer(s), such as layer (B), usable in the Laminated Film can be varied and tailored depending on the end use application.

Accordingly, the LLDPE composition usable in the layer(s) of the present invention may have a density of 940 kg/m³ or less, e.g. a density of 905-940 kg/m³, preferably of more than 915 kg/m³, more preferably between 915 to 935 kg/m³. Said multimodal LLDPE for layer (A) as defined above and below has more preferably a density of 920 to 935 kg/m³. LLDPE for layer (C) as defined above or below has more preferably a density of 912 to 928 kg/m³. The density of LLDPE for the optional layer(s), such as layer (B), as defined above or below is preferably as defined for LLDPE of layer (A) or (C), more preferably as defined for LLDPE of layer (A).

The melt flow rate, MFR₂, of LLDPE usable in the layer(s) of Laminated Film is preferably up to 20 g/10min, e.g. of 0.05 to 10 g/10min, preferably of 0.1 to 6.0 g/10min, more preferably in the range of 0.1 to 5 g/10min. The multimodal LLDPE of layer (A) as defined above or below has more preferably a MFR₂ of 0.1 to 0.5 g/10min. LLDPE for layer (C) as defined above or below has more preferably a MFR₂ of 0.5 to 2.0 g/10 min. LLDPE for the optional layer(s), such as layer (B), as defined above or below has preferably a MFR₂ as defined for multimodal LLDPE of layer (A) or LLDPE of layer (C), even more preferably as defined for multimodal LLDPE of layer (A).

The FFR_{21/2} of a multimodal LLDPE usable in the present invention is typically more than 15, suitably 80 to 200, preferably 80 to 150, more preferably 90 to 120. The Mw of LLDPE may be in the range 100,000 to 300,000, preferably 150,000 to 270,000. The molecular weight distribution (MWD), Mw/Mn, of said multimodal LLDPE is at least 5, preferably 8 or more, such as 10 to 40, preferably up to 30. Depending on the end application also a range of 10 to 25 may be preferred.

Unimodal LLDPE usable in the layers of the present invention has typically a MWD of less than 10, more preferably less than 8, such as of 2 to 8.

LLDPE used in layer (C) of the Laminated Film is preferably a unimodal LLDPE as defined above. Alternatively, LLDPE used in said layer (C) is multimodal LLDPE as defined above or below. In transparent Laminated Film embodiments LLDPE in layer (C) is preferably unimodal LLDPE. As mentioned above, if multimodal LLDPE is present in a transparent Laminate Film embodiment, then it is in an amount of up to 30 wt% of the polymer composition of said layer (C).

When optional layer(s), such as layer (B), of the Laminated Film comprise LDPE, then said layer(s) preferably comprise a blend of a multimodal or, preferably, a unimodal LLDPE and LDPE, and optionally HDPE as defined above and below.

The term "ethylene copolymer" or "LLDPE copolymer" is used in this context to encompass polymers comprising repeat units deriving from ethylene and at least one other C3-20 alpha olefin monomer. LLDPE copolymer as defined above and below may be formed from ethylene along with at least one C3-12 alpha-olefin comonomer, e.g. 1-butene, 1-hexene or 1-octene. Preferably, LLDPE is a binary copolymer, i.e. the polymer contains ethylene and one comonomer, or a terpolymer, i.e. the polymer contains ethylene and two or three comonomers. Preferably, LLDPE comprises an ethylene hexene copolymer, ethylene octene copolymer or ethylene butene copolymer. The amount of comonomer present in LLDPE is at least 0.25 mol-%, preferably at least 0.5 mol-%, such as preferably 0.5 to 12 mol%, e.g. 2 to 10 mol-% relative to ethylene. In some embodiments a comonomer range of 4 to 8 mol-% may be desired. Alternatively, comonomer contents present in said LLDPE may be 1.5 to 10 wt%, especially 2 to 8 wt% relative to ethylene. Both the LMW and HMW components of a multimodal LLDPE as defined above or below are preferably copolymers of ethylene as defined above. In any copolymeric HMW component, at least 0.5 mol-%, e.g. at least 1-mol%, such as up to 10 mol-%, of repeat units derive from the comonomer.

The LMW component of LLDPE usable in the layers of Laminated Film may have a MFR₂ of at least 50, typically 50 to 3000 g/10 min, preferably at least 100 g/10 min, more preferably 110 to 500 g/10 min. The molecular weight of the low molecular weight component should preferably range from 15,000 to 50,000, e.g. 20,000 to 40,000.

The density of said LMW component of said LLDPE may range from 930 to 980 kg/m³, e.g. 940 to 970 kg/m³, more preferably 945 to 955 kg/m³ in the case of copolymer and 960 to 980 kg/m³, typically 965 to 977 kg/m³ in the case of homopolymer.

Said LMW component has preferably from 30 to 70 wt%, e.g. 40 to 60 wt% of LLDPE with the HMW component forming 70 to 30 wt%, e.g. 40 to 60 wt%. In one embodiment the HMW component comprises 50 wt% or more of the multimodal LLDPE as defined above or below.

The HMW component of said multimodal LLDPE has typically a lower MFR₂ and a lower density than the lower molecular weight component. Said HMW component has preferably an MFR₂ of less than 1 g/10 min, preferably less than 0.5 g/10 min, especially less than 0.2 g/10min. The density of said HMW is typically less than 915 kg/m³, e.g. less than 910 kg/m³, preferably less than 905 kg/m³. The Mw of the higher molecular weight component may range from 100,000 to 1,000,000, preferably 250,000 to 500,000.

Preferably, LLDPE as defined above or below and usable in the layer(s) of the Laminated Film, when produced to a blown film consisting of said LLDPE composition and having a film thickness of 40 µm, has a haze value of more than 30%, preferably more than 40%, in some embodiments even more than 50% may be desirable, when determined according to ASTM D 1003.

LLDPE as defined above or below for layer (A) is preferably a multimodal znLLDPE copolymer composition as defined above or below. LLDPE as defined above or below for layer (C) can be mLLDPE or znLLDPE, preferably mLLDPE copolymer or znLLDPE copolymer, as defined above or below. LLDPE for said optional layer (B) may be mLLDPE or znLLDPE, preferably mLLDPE, as defined above or below for layer (A) and layer (C).

The preferable multimodal LLDPE for the layer(s) of Laminated Film is preferably an in-situ blend of the polyethylene copolymer or homopolymer components. Said multimodal LLDPE is thus preferably obtainable by a multistage process. Such multimodal LLDPE has good homogeneity properties contributing to final properties, e.g. mechanical properties, of the Laminated Film.

### Preparation of LLDPE

LLDPE, suitable as a layer material in the laminate (i) and substrate (ii) of invention can be any conventional, e.g. commercially available, polymer composition. Such LLDPE's are available i.a. from Borealis and other PE producers/suppliers. The following commercial grades of LLDPE's are given only as examples without limiting thereto: I.a. grades available from Borealis, i.a. Borstar® FBXXXX grades, such as Borstar® FB2310 or Borstar® FB2230 etc., can be mentioned as feasible multimodal LLDPE grades for at least layer (A) and, if present, for optional layer(s), such as layer (B); and i.a. grades available from Borealis or from Reliance, such as Indothene LL 20FS01 0 from Reliance, can be mentioned as LLDPE that is feasible as a transparent LLDPE material for use e.g. in layer (C) and/or in optional layer(s), such as layer (B), e.g. in transparent embodiments of the invention.

Alternatively, suitable LLDPE polymer compositions can be produced in a known manner according to or analogously to conventional polymerisation processes, including solution, slurry and gas phase processes, described in the literature of polymer chemistry.

Unimodal polyethylene, e.g. LLDPE, as defined above or below is preferably prepared using a single stage polymerisation, e.g. solution, slurry or gas phase polymerisation, preferably a slurry polymerisation in slurry tank or, more preferably, in loop reactor in a manner well known in the art. As an example, said unimodal LLDPE can be produced e.g. in a single stage loop polymerisation process according to the principles given below for the polymerisation of low molecular weight fraction in a loop reactor of a multistage process, naturally with the exception that the process conditions (e.g. hydrogen and comonomer feed) are adjusted to provide the properties of the final unimodal polymer.

Multimodal (e.g. bimodal) LLDPE as defined above and below can be made by blending mechanically two or more separately prepared polymer components, or preferably, by in *situ* blending in a multistage polymerisation process during the preparation process of the polymer components. Both mechanical and *in situ* blending is well known in the field.

Accordingly, preferred multimodal LLDPE polymers are obtainable by in-situ blending in a multistage, i.e. two or more stage, polymerization process including solution, slurry and gas phase process, in any order. Alternatively said multimodal LLDPE may be obtainable by using two or more different polymerization catalysts, including multi- or dual site catalysts, in a one-stage polymerization.

Preferably the multimodal LLDPE as defined above or below is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, said multimodal LLDPE is made using a slurry polymerization in a loop reactor followed by a gas phase polymerization in a gas phase reactor.

A loop reactor - gas phase reactor system is well known as Borealis technology, i.e. as a BORSTAR^{®} reactor system. Any multimodal LLDPE present in layers is thus preferably formed in a two-stage process comprising a first slurry loop polymerisation followed by gas phase polymerisation. Such multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerized.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene.

As an example a chain-transfer agent, preferably hydrogen, is added as required to the reactors, and at least 100 to preferably at least 200, and up to 1500, preferably up to 800 moles of H₂/kmoles of ethylene are added to the loop reactor, when the LMW fraction is produced in this reactor, and 0 to 60 or 0 to 50, and, again depending on the desired end application, in certain embodiments even up to 100, or up to 500 moles of H₂/kmoles of ethylene are added to the gas phase reactor when this reactor is producing the HMW fraction.

Preferably, the lower molecular weight polymer fraction is produced in a continuously operating loop reactor where ethylene is polymerized in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst. Prepolymerization step may precede the actual polymerisation.

Where the higher molecular weight component is made as a second step in a multistage polymerisation it is not possible to measure its properties directly. However, e.g. for the above described polymerisation process of the present invention, the density, MFR₂ etc of the HMW component can be calculated using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835. The density is calculated from McAuley's equation 37, where final density and density after the first reactor is known. MFR₂ is calculated from McAuley's equation 25, where final MFR₂ and MFR₂ after the first reactor are calculated.

LLDPE as defined above and below may be made using any conventional catalyst, such as Ziegler-Natta catalysts, chromium catalysts or single site catalysts (SSC), which SSC catalysts include metallocenes and non-metallocenes. All these catalysts are well known in the field. The preferred are any conventional Ziegler Natta and single site catalysts and the choice of an individual catalyst used to make znLLDPE or mLLDPE, respectively, is not critical.

In case of mLLDPE, metallocene catalysis is preferably used herein. The preparation of the metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing said mLLDPE component.

In case of znLLDPE as defined above or below the polyethylene polymer composition is manufactured using Ziegler-Natta catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

In a very preferable embodiment of the invention the polyethylene composition is produced using a ZN catalysts disclosed in WO 2004/000902, WO 2004/000933 or EP 688794.

Conventional cocatalysts, supports/carriers, electron donors etc can be used.

### HDPE composition

HDPE usable in the layer(s) of the present invention is in principal not limited. HDPE may typically have a density of 940 kg/m³ or more. The upper limit is typically 980 kg/m³. The density can be selected depending on the end application. E.g. HDPE may be used having a density of 945 to 960 kg/m³. HDPE may be unimodal or multimodal as defined above. If multimodal, then typically at least one component, preferably at least the LMW component is a homopolymer. HDPE are very well known and can be commercially available or be prepared using well-documented polymerisation processes, e.g. processes described above and by adjusting the process conditions to obtain the desired density of HDPE. I.a. commercial grades of HDPE's as highly feasible materials for layer(s) of the invention, commercial grades available from Borealis, and Reliance's commercial grades, e.g. F46003, can be mentioned as examples only, i.e. not limiting thereto.

### LDPE composition

LDPE means herein a low-density ethylene homopolymer produced in high-pressure polymerization process. Such LDPEs are well known in the art and they typically contain long chain branching which differentiates LDPEs from linear low-density polyethylenes, LLDPEs.

LDPE usable in the layer(s) of present invention is in principal not limited. LDPE may typically have a MFR₂ of at least 0.05 g/10 min, preferably in the range 0.1-20 g/10 min, more preferably 0.3-10 g/10 min, still more preferably 0.4-5 g/10 min. In one embodiment, LDPE with MFR₂ of 0.2 to 1.0 g/10 min is preferred. The density of the LDPE is typically 905-940 kg/m³, preferably 910 to 935 kg/m³, e.g. 915 to 930 kg/m³. The Vicat softening temperature of LDPE is preferably 60-200°C, more preferably 80-150°C, e.g. about 90-110°C. The Tm of the LDPE is preferably 70-180°C, more preferably 90-140°C, e.g. about 110-120°C.

LDPEs suitable for Laminated Film are any conventional LDPEs, e.g. commercially known LDPEs, or they may be prepared according to any conventional high-pressure polymerisation (HP) process in a tubular or autoclave reactor using a free radical formation. Such HP processes are very well known in the field of polymer chemistry and described in the literature, see e.g. Vieweg, Schely and Schwarz: Kunstoff Hanbuch, Band IV, Polyolefins, Carl Hanser Verlag (1969), pages 39-51. Typical pressures are from 1000 to 3000 bar. The polymerization temperature is preferably 150-350°C. The free radical initiators are commonly known, e.g. organic peroxide based initiators.

### Preparation of Laminated film

For Laminated Film formation using polymer mixtures, the different polymer components in any of layers of Laminated Film are typically intimately mixed prior to layer formation, for example using a twin screw extruder, preferably a counter-rotating extruder.

The layered structure of the multilayer film laminate (i) film of the invention as defined above or below may be prepared by any conventional film formation process including extrusion procedures, such as cast film or blown film extrusion, lamination processes or any combination thereof. Preferred method is coextrusion and lamination, more preferably coextrusion.

Further preferably, the multilayer film of layers (A) and (C) and of the optional layer(s), e.g. layer (B), is formed by blown film extrusion, more preferably by blown film coextrusion, processes. The compositions providing layers (A), (C) and e.g. optional layer (B) can typically be produced by extrusion through an annular die, blowing into a tubular film by forming a bubble which is collapsed between nip rollers after solidification. This film can then be slit, cut or converted as desired.

The blown (co)extrusion can be effected at a temperature in the range 160°C to 240°C, and cooled by blowing gas (generally air) at a temperature of 10 to 50°C to provide a frost line height of 1 to 8 times the diameter of the die. The blow up ratio should generally be in the range 1.2 to 6, preferably 1.5 to 4.

Thus said multilayer film laminate (i) of the invention is preferably a coextruded film laminate (i), more preferably a blown coextruded film laminate (i)

More preferably, said multilayer film laminate (i) is in non-oriented form and present in the Final Laminate in a non-oriented form. "Non-oriented" means herein that the laminate (i) has not subjected any stretching/orientation step after the film formation, preferably after the coextrusion step.

Accordingly, the invention provides a method for preparing a multilayer film laminate (i) for a laminated film by coextrusion, preferably by blown film coextrusion to obtain a coextruded laminate (i) as defined above, below or in claims.

If substrate (ii) of Laminated Film is a multilayer film, then it is preferably a coextruded multilayer substrate (ii) prepared as defined above for multilayer film laminate (i). In case the substrate (i) is a monolayer it may be prepared using any conventional film preparation process, such as cast or blown film extrusion method. If the substrate is subsequently oriented, the orienting/stretching step can be effected in a conventional manner using conventional machinery.

The lamination step of the multilayer film laminate (i) and substrate (ii) may be effected in any conventional lamination device using conventional lamination methods, such as adhesive lamination including both solvent based and "solvent less" adhesive lamination using any conventional, e.g. commercially available, adhesive, or sandwich lamination with or without a melt web which can be pressed between the substrates. Such melt web can be any conventional melt web material, such as EVA or LDPE. Preferably said sandwich lamination involves heating the layer material to be laminated together to softening or melting temperature of the melt web material or of one or to of the layer materials of layer (A) of laminate (i) and/or of the surface material of substrate (ii). Solvent based and solvent less lamination methods are well known and well described in various literatures.

The Laminated Films obtained by the processes of the invention can be used for preparing packaging applications, such as sacks or bags in a known manner. Alternatively, said Laminated Film may be further processed to tubular films which are either used directly in conventional vertical or horizontal form-fill-seal machines as well known in the art.

The invention thus provides also the following processes:
Process for preparation of a multilayer film laminate (i) as defined above or below, wherein said multilayer film laminate (i) is formed by coextrusion of a polymer compositions for a layer (A), layer (C) and an optional layers to form a coextruded film laminate (i) selected from, in the given layer order,
   - coextruded (A/C)-layer laminate (i) as defined above or below,or
   - coextruded (A/B/C)-layer laminate (i) as defined above or below.
Process for preparation of a laminated multilayer film as defined above or below, wherein
   - a multilayer film laminate (i) is laminated on a substrate (ii) as defined above or below to form a laminated film, preferably selected from a layer structure, in the given layer order,
   - (C/A-layer film laminate (i))/(substrate (ii)) as defined above or below, or
   - (C/B/A-layer film laminate (i))/(substrate (ii)) as defined above or below.

### Film Properties

The thickness of the Laminated Film of the invention is in principal not limited and can vary considerably depending on the end application.

Typically, the multilayer film laminate (i) as defined above or below has a thickness with the range of at least 5 µm, typically 10 to 300 µm, preferably 15 to 250 µm, more preferably 25 to 100 µm. The substrate (ii) as defined above or below may have a thickness of at least 10 µm. The upper limit of the thickness of the substrate (ii) is not limited and may be 250 µm or less. Typically, the thickness of substrate (ii) is 10 to 30 µm, preferably 10 to 15 µm. The final Laminated Film as defined above or below may have a total thickness of at least 25 µm, preferably at least 45 µm. The upper limit of Laminated Film is not critical and may be e.g. less than 550 µm, e.g. less than 300 µm, typically less than 200 µm, preferably less 140 µm or less. Preferred thickness of Film Laminate may vary in the range of 45 to 120 µm.

Thus also the layer thickness distribution (%) of Laminated Film can be tailored depending on the end use. Thus the Laminated Film of the invention may have a layer thickness distribution (%) of (multilayer film laminate (i))/(substrate (ii)) of (60-95%)/(40-5%), typically (70-95%)/(30-5%), preferably (80-90%)/(20-10%) calculated from the final Laminated Film thickness of 100%.

In one of the preferable embodiments the layer thickness distribution (%) of multilayer film laminate C/A is typically of (10-90%)/(90-10%), preferably (20-80%) /(80-20%), more preferably (33-67%)/(67-33%) calculated from the final multilayer film laminate thickness of 100%. When the optional layer (B) is present, then layers (A) and (B) may together total to thickness distribution given for (A) in A/C structure, i.e. together total to 90-10%, preferably 67-33% of the multilayer film laminate (i). Alternatively, when the optional layer (B) is present, then layers (C) and (B) may together total to thickness distribution given for (C) in A/C structure, i.e. together total to 10-90%, preferably 67-50% of the multilayer film laminate (i).

The layer (B) forms typically 10-90%, preferably 33-50%, of the combined thickness of layers (A) and (B), or alternatively of layers (C) and (B).

Preferable Laminated Film structures comprise the following, in a given layer order:
- ((C/A)-layer film laminate (i))/(substrate (ii)) as defined above or below, or
- ((C/B/A)-layer film laminate (i))/(substrate (ii)) as defined above or below.

The good mechanical properties of the Laminated Film as defined above or below may be expressed as relative impact strength determined as dart drop according to ISO 7765-1, method "A". Said method is described below under "Determination methods".

Said relative impact strength of said multilayer film laminate (i) of the invention as defined above or below is preferably at least 2.0 g/µm, or may be even at least 3 g/µm, preferably even at least 3.5 g/µm, in end use applications, wherein good mechanical properties are needed.

In embodiments, wherein good mechanical properties are an advantage or needed, then said Laminated Film of the invention can provide said relative impact strength of as high as at least 4 g/µm preferably at least 4.6 g/µm, in some embodiments as high as at least 4.7 g/µm, or even at least 4.8 g/µm, depending on the end use.

The upper limit of said relative impact strength of film laminate (i) or final Laminated Film is not critical and may be e.g. up to 50 g/µm, e.g. up to10 g/µm.

A further mechanical property can also preferably be achieved with the Laminated Film of the invention, namely the tensile strength is measured in machine direction (MD) according to ISO 527-3 as described below under "Determination methods". Thus the tensile strength in MD of the Laminated Film as defined above or below is preferably at least 285 kg/cm³, more preferably at least 290 kg/cm³. In mechanically demanding applications the tensile strength in MD of said Laminated Film as defined above or below can be as high as at least 300 kg/cm³.

The bond strength between the substrate (ii) and the multilayer film laminate (i) of Laminated Film as defined above or below is preferably also improved when expressed e.g. as peel strength Peak value determined according to ASTM D 903 as described below under "Determination methods". The width of film sample was 15 mm, m/c speed of 200 mm/min. Thus the Peel Strength Peak Value of Laminated Film of invention as defined above or below is preferably at least 2.50 N, or even at least 2.60 N, when high peel strength is needed. In very demanding applications said Laminated Film of invention can provide a Peel Strength Peak Value as high as at least 3.0 N. The upper limit of said Peel Strength Peak Value is not limited and can be e.g. less than 20 N.

The matt surface of layer (A) as determined with multimodal LLDPE with broad MWD and/or haze value, provides a micro roughness and diffraction of light occurs. As a result clarity of layer (A) is decreased. However, the lamination surprisingly results in laminate with high clarity. Unexpectedly and preferably, a superior balance between the optical and mechanical properties can be achieved. Thus while multimodal LLDPE contributes to the mechanical strength of the laminate by virtue of their high mechanical properties, their inherent feature of high haze value and poor see through clarity no more remains a hindrance in manufacturing transparent laminates.

The Laminated Film of the invention is very useful for a wide variety of end applications including, without limiting to, packaging applications, such as packaging articles in consumer, food, non-food, such as cosmetic, medical etc. field.

An article comprising a laminated multilayer film is thus also provided. Said article may contain solid or liquid goods.

### Determination Methods

To disclose the invention in a manner sufficiently clear and complete, when a film sample is used in below determination methods for defining the properties of the invention generally in the description part above or in claims below, as well as for measuring the properties of examples below, unless otherwise stated, then the used film formation technology and the used thickness of said film sample were as described below under "Film Sample Preparation". Said film sample is referred in the relevant determination method descriptions below as "Film Sample". It is to be understood that for said property definitions the thickness/thickness distribution (%) of the layers of Laminated Film, the number of said layers, the final, i.e. total, thickness of the Laminated Film and film formation technology used for Film Sample are not limiting the Laminated Film, but the layer thickness/layer thickness distribution (%), the layer number, the final thickness of Laminated Film and/or the film formation technology can be varied within the scope of claims.

Otherwise a sample used in a determination method is in accordance with the standard specified for that method.

**Density** of the materials was measured according to ISO 1183:1987 (E), method D, with isopropanol-water as gradient liquid. The cooling rate of the plaques when crystallizing the samples was 15 C/min. Conditioning time was 16 hours.

**Comonomer content (mol%)** was determined by C¹³NMR. The C¹³NMR spectra of the polymers were recorded on Bruker 400MHz spectrometer at 130°C from samples dissolved in 1,2,4-trichlorobenzene/benzene-d6 (90/10 w/w).

**MFR₂, MFR₅** and **MFR₂₁** were measured according to ISO 1133 at 190°C at loads of 2.16, 5.0, and 21.6 kg respectively. Flow rate ratio **FRR_{21/2}** is calculated from MFR₂₁/MFR₂.

**Molecular weights and molecular weight distribution, Mn, Mw and MWD** were measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrenedivinylbenzene) and 1,2,4-trichlorobenzene (TCB, stabilized with 250 mg/L 2,6-Di tert butyl-4-methyl-phenol) as solvent at 140°C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 9.54 x10⁻⁵ dL/g and a: 0.725 for PS, and K: 3.92 x10⁻⁴ dL/g and a: 0.725 for PE). All samples were prepared by dissolving 0.5 - 3.5 mg of polymer in 4 mL (at 140°C) of stabilized TCB (same as mobile phase) and keeping for 2 hours at 140°C and for another 2 hours at 160°C with occasional shaking prior sampling in into the GPC instrument.

**Impact Strength is determined on Dart-drop (g/50%).** Dart-drop was measured using ISO 7765-1, method "A". A dart with a 38 mm diameter hemispherical head was dropped from a height of 0.66 m onto a Film Sample clamped over a hole. If the specimen fails, the weight of the dart was reduced and if it does not fail the weight was increased. At least 20 specimens are tested. The weight resulting in failure of 50% of the specimens was calculated and this provides the dart drop impact (DDI) value (g).

The relative DDI (g/µm) can be calculated by dividing the DDI by the thickness of the measured film sample.

**Tensile Strength** was measured according to ISO 527-3 using a Film Sample. The speed of testing is 500 mm/min. The test temperature was 23°C. Width of Film Sample was 25 mm.

**Elongation at break** was determined according to ISO 527-3 using a Film Sample.

Haze was measured according to ASTM D 1003 using a Film Sample.

Gloss was measured at angle 60° according to ASTM D 2457 using a Film Sample.

**Peel strength Peak value** was measured according to ASTM D 903, m/c speed 200 mm/min, using a Film Sample. Film Sample had width of 15 mm.

### Film Sample Preparation

### Preparation of Film Samples used in determinations for defining generally above or in claims below properties of polymer compositions used in layer(s) of Laminated Film or properties of individual layer(s) or of film laminate (i) of Laminated Film:

The film samples with film thickness of 40 µm were used for general property definitions, such as Haze, Gloss and Impact Strength.

The film samples were prepared by coextruding a 3-layer structure. Rajoo Engineering (supplier Rajoo, internet: www.rajoo.com) coextrusion line was used with extruder screw diameter of 50/50/50 mm, die diameter 350mm, at a blow up ratio (BUR) of 1: 2.4 and Die gap 2.0 mm. Frost line height (FLH) was 600 mm.

The temperature settings on the three extruders were A=190-210°C / B=190-210°C / C=190-210°C and the temperature setting on the extruder die was 220°C. The formed films had target thicknesses of about 40 microns (µm) and said thickness may vary between 37-40µm.

In case of a property definition of a polymer composition or of a layer, said polymer composition to be tested or the polymer composition of said layer was used for forming each layer of the 3-layer structure. In case of a film laminate (i) with A/C-layer structure, two layers of the 3-layer structure were formed by using either a polymer composition of (A)- or (C)-layer. In case of film laminate (i) with A/B/C-layer, A/A/C-layer or A/C/C-layer structure, a polymer composition for layer (A), (B) and (C) were used to form the relevant layer in question.

### Preparation of Film Samples used in determinations for defining generally above or in claims properties of Laminated Film:

The laminated film samples having a thickness of 50µm were used. Said laminated film samples were prepared as follows: Multilayer film laminates (i) were prepared as described above for film laminate (i) samples, i.e. by coextruding a 3-layer structure, wherein each layer had the polymer composition of the tested film sample, e.g. A/C, A/A/C or A/B/C or A/C/C. Rajoo Engineering (supplier Rajoo, internet: www.rajoo.com) coextrusion line was used with extruder screw diameter of 50/50/50 mm, die diameter 350mm, at a blow up ratio (BUR) of 1: 2.4 and Die gap 2.0 mm. Frost line height (FLH) was 600 mm.

The temperature settings on the three extruders were A=190-210°C / B=190-210°C / C=190-210°C and the temperature setting on the extruder die was 220°C. The formed films had target thicknesses of about 40 microns (µm) and said thickness may vary between 37-40µm.

The formed multilayer film laminates (i) with thicknesses of about 40 microns (µm) were then laminated, herein adhesive laminated at room temperature, substrate (ii) using Henkel 1511 adhesive in a Rotomac Laminator. The target thickness of substrates (i) was 10 micron (µm) and said thickness may vary between 10-13 µm.

The formed Laminated Film samples had accordingly a target thickness of about 50 µm.

The layer (A) side, i.e. lamination layer (A) of film laminate (i) is thus laminated to the substrate (ii) by lamination. The used lamination method is not critical for the property determinations.

### Film Sample Preparation for below examples

Films having an ABC-structure were coextruded on a 3-layer Rajoo Engineering (supplier Rajoo, internet: www.rajoo.com) coextrusion line with extruder screw diameter of 50/50/50 mm, die diameter 350mm, at a blow up ratio (BUR) of 1: 2.4 and Die gap 2.0 mm. Frost line height (FLH) was 600 mm. The used layer compositions are given below in tables 1.

The temperature settings on the three extruders were A=190-210°C / B=190-210°C / C=190-210°C and the temperature setting on the extruder die was 220°C. The formed A/B/C-layer film laminates (i) had thicknesses in a range of 38 microns (µm). Each laminate (i) were then adhesive laminated to 10 micron (µm) substrate (ii) which was a polyester film using Henkel 1511 adhesive in a Rotomac Laminator. The used polyester was PET. The layer (A) side, i.e. lamination layer (A) of film laminate (i) was thus laminated to the substrate (ii) by an adhesive lamination using the above specified adhesive.

The formed laminated film samples had a thickness of about 48 µm.

### EXAMPLES

### Preparation of Polymers

### Examples:

### Example 3: znLLDPE 1

The multimodal znLLDPE 1 polymer used in the films of examples of the invention was prepared as follows: Multimodal znLLDPE polymer was prepared in a pilot scale multistage reactor system containing a loop reactor and a gas phase reactor. A prepolymerization step preceded the actual polymerisation step. The prepolymerization stage was carried out in slurry in a 50 dm³ loop reactor at about 80°C in a pressure of about 65 bar using the polymerisation catalyst prepared according to Example 1 of WO 2004/000902 and triethylaluminum as the cocatalyst. The molar ratio of aluminum of the cocatalyst to titanium of the catalyst was about 20. Ethylene was fed in a ratio of (200g of C2)/(1g/catalyst). Propane was used as the diluent and hydrogen was fed in amount to adjust the MFR₂ of the prepolymer to about 10 g/10 min. The obtained slurry together with prepolymerized catalyst and triethyl aluminum cocatalyst were transferred to the actual polymerisation step, i.e. introduced into a 500 dm³ loop reactor, wherein a continuous feed of propane, ethylene and hydrogen was also introduced. The ratio of H2/C2 in the reaction mixture was 240 mol/kmol. The mol-ratio of 1-butene comonomer to ethylene, C4/C2 was 570 mol/kmol. The loop reactor was operated at 95°C temperature and 60 bar pressure. The polymer obtained from the loop reactor at a production rate of about 30 kg/h had MFR₂ of 300 g/10 min and a density of about 951 kg/m³.

The slurry was then transferred to a fluidized bed gas phase reactor, where also additional ethylene, 1-butene comonomer and hydrogen were added, together with nitrogen as an inert gas to produce the HMW component in the presence of the LMW component. The ethylene content in gas phase reactor was 19 mol-%, the ratio of H2/C2 in the recycle gas was 7 mol/kmol and the ratio of C4/C2 was 460 mol/kmol. The gas phase reactor was operated at a temperature of 80°C and a pressure of 20 bar. The production rate of the polymer was about 75 kg/h. The split (wt%) loop/gas phase was 41/59. The polymer obtained from the gas phase reactor had Mw of the polymer product was 233 000 g/mol. The comonomer content was 7.6 wt%.

The reactor powder was then stabilized with conventional additives and pelletized in a known manner using CIM90P counter-rotating twin screw extruder manufactured by Japan Steel Works. The pelletized final polymer product had MFR2 of 0.2 g/10 min, MFR₂₁ of 22 g/10 min and a density of about 923 kg/m³. Molecular weight distribution was Mw/Mn of 17.

Haze (%) of LLDPE 1: The LLDPE 1 had a haze value of 60-65% when measured according to ASTM D 1003 using a blown Film Samples consisting of LLDPE 1 and prepared as described above for Film Samples for polymer composition properties with a thickness varying between 37-40 µm.

Moreover, said LLDPE 1 when produced to a Film Sample consisting LLDPE1 with a thickness of 150 µm had a haze value of 72%

LLDPE 2: C4-LL - Indothene LL 20FS010 which is a commercially available linear low density copolymer of ethylene supplied by Reliance and which has a MFR₂ of 1.0 g/10 min and density of 920 kg/m³.

LDPE: LDPE - Indothene 1005FY20 which is a commercially available low-density polyethylene homopolymer produced in high-pressure process using autoclave technology, is supplied by Enichem and has a MFR₂ of 0.5 g/10 min and density of 920 kg/m³.

HDPE: HDPE - F46003 which is a commercially available high-density polyethylene polymer supplied by Reliance and has a MFR₂ of 0.3 g/10 min and density of 946 kg/m³.

**Table 1: Film laminates (i) of examples**

| | Lamination layer (A) | Core Layer (B) | Outer Layer (C) |
|---|---|---|---|
| Comparative Sample A | 90% LLDPE 2 + 5% HDE + 5% LDPE | 70% LLDPE 2+20% HDPE + 10% LDPE | 90% LLDPE 2 + 10% LDPE |
| Sample 1 of the invention | 100% LLDPE 1 | 70% LLDPE 2 + 20% HDPE + 10% LDPE | 90% LLDPE 2 + 10% LDPE |
| Sample 2 of the invention | 100% LLDPE 1 | 100% LLDPE 1 | 90% LLDPE 2 + 10% LDPE |
| Sample 3 of the invention | 100% LLDPE 1 | 80% LLDPE 1 + 20% HDPE | 90% LLDPE 2 + 10% LDPE |

As can be seen from the test data of table 2, the Comparative Sample A had a very low haze (good see-through clarity), whereas film laminate (i) samples 1, 2 and of the invention had higher haze values as they have a multimodal LLDPE 1 in the lamination layer (A) or in lamination layer (A) and in Core layer (B).

After the sample films are laminated to substrate (ii), i.e. PET Polyester, Comparative Sample A and the Samples 1-3 of the invention have a very comparable low haze value.

Moreover the bond strength between the substrate (ii) (PET film) and the film laminate (i) (A/B/C) is improved in the Samples 1-3 of the invention compared to Comparative Sample A. Also the impact strength and tensile properties of the examples 1-3 of invention are improved compared to comparative example A.

The properties of films and laminates are tabulated in Table 2.

**Table 2 Film samples had a width of 25 mm in all other determinations except in Peel strength Peak value, wherein a film sample of width of 15 mm was used.**

| | Gloss Laminated Film, measured from layer (C) side, (%) | Haze, (%) | | Peel strength Peak value, (N) | Impact Strength, (gm/µ) | | Tensile Strength (MD), (kg/cm²)/ Elongation, (%) |
|---|---|---|---|---|---|---|---|
| | | Film Laminate (i) | Final Laminated Film | | Film Laminate (i) | Final Laminated Film | |
| Sample A | 84.4 | 6.73 | 6.26 | 2.45 | 1.55 | 4.56 | 284 / 380 |
| Sample B | 81.6 | 44.53 | 6.39 | 2.55 | 2.63 | 4.97 | 290 / 310 |
| Sample C | 69.7 | 43.09 | 10.26 | 3.13 | 3.64 | 4.97 | 304 / 270 |
| Sample D | 78.2 | 43.20 | 10.51 | 2.65 | 3.51 | 4.97 | 320 / 260 |
| | | → | | | | | |

## Claims

1. A laminated multilayer film which comprises a multilayer film laminate (i) and a substrate (ii), wherein the multilayer film laminate (i) comprises at least two layers, an inner layer (A) and an outer layer (C), wherein layers (A) and (C) comprise different polymer compositions **characterized in that**
- said inner layer (A) comprises a multimodal polyethylene composition (LLDPE) having
- a density of 940 kg/m³ or less,
- a molecular weight distribution Mw/Mn of at least 8, and
- a MFR₂ of 0.05 to 20 g/10 min, when determined according to ISO 1133 (at 190 °C and 2.16 kg load), and **in that**
- said inner layer (A) of the multilayer film substrate (i) is in contact with a surface of the substrate (ii).

2. A laminated multilayer film which comprises a multilayer film laminate (i) and a substrate (ii), wherein the multilayer film laminate (i) comprises at least two layers, an inner layer (A) and an outer layer (C), wherein layers (A) and (C) comprise different polymer compositions, **characterized in that**
- said inner layer (A) comprises a polymer composition which, when produced to a blow film consisting of said polymer composition and having a film thickness of 40 µm, has a haze value of at least 30%, preferably at least 40%, as determined according to ASTM D 1003, and
- said inner layer (A) of the multilayer film laminate (i) is in contact with a surface of the substrate (ii).

3. The laminated film according to claim 1, wherein
- said inner layer (A) comprises a multimodal LLDPE polymer composition which, when produced to a blown film consisting of said polymer composition and having a film thickness of 40 µm, has a haze value of at least 30%, preferably at least 40%, when determined according to ASTM D 1003.

4. The laminated film according to any preceding claim, wherein the polymer composition present in layer (A) is a multimodal LLDPE which is a linear low density copolymer composition of ethylene with one or more alpha-olefin comonomers.

5. The laminated film according to any preceding claim, wherein layer (C) comprises one or more of LLDPE or LDPE composition, preferably LLDPE composition and LDPE composition.

6. The laminated film according to any preceding claims, wherein the multimodal LLDPE composition of layer (A) and a LLDPE composition of layer (C), if present, has a density of 905-940 kg/m³, preferably of more than 915 kg/m³, more preferably of 915 to 935 kg/m³.

7. The laminated film according to any preceding claim, wherein the LLDPE composition of layer (C) is a unimodal or multimodal LLDPE composition.

8. The laminated film according to any preceding claim, wherein the multimodal LLDPE composition of layer (A) has FFR_{21/2} of 80 to 200, preferably 80 to 150, more preferably 90 to 120.

9. The laminated film according to any preceding claim, wherein the molecular weight distribution Mw/Mn (MWD) of a multimodal LLDPE composition is at least 5, preferably 8 or more, such as 10 to 40.

10. The laminated film according to any preceding claim, wherein the unimodal LLDPE composition, if present in layer (C), has a MWD of less than 10, preferably less than 8, such as of 2 to 8.

11. The laminated film according to any preceding claim, wherein the multilayer film laminate (i) comprises a further layer (B), in the below given layer order,
- an inner layer (A) as defined in any of the preceding claim,
- a core layer (B),
- an outer layer (C) as defined in any of the preceding claim.

12. The laminated film according to any preceding claim, wherein layer (B) comprises the same polymer composition as layer (A) or layer (C).

13. The laminated film according to any preceding claim, wherein layer (B) comprises a high-density polyethylene (HDPE) composition, and optionally a low-density polyethylene (LDPE) composition.

14. The laminated film according to any preceding claim, wherein layer (B) comprises a multimodal LLDPE composition and optionally HDPE composition having a density more than 940 kg/m³.

15. The laminated film according to any preceding claim, wherein layer (B) comprises a unimodal LLDPE composition and LDPE composition, and optionally HDPE composition.

16. The laminated film according to any preceding claim, wherein the substrate (ii) comprises a polymer composition selected from one or more of the following polymers: a polyester, such as polyethylene terephthalate (PET), Polypropylene (PP), preferably PP homopolymer or PP random copolymer, polyethylene or polyamide.

17. The laminated film according to any preceding claim, wherein the substrate (ii) comprises, preferably consists of a polyester, preferably of a polyethylene terephthalate (PET).

18. The laminated film according to any preceding claim, wherein the substrate (ii) comprises a bioriented film layer, preferably consists of a bioriented film layer, which comprises, preferably consists of, bioriented PP (BOPP), bioriented PE (BOPE) or bioriented PA (BOPA).

19. The laminated film according to any preceding claim, wherein the laminated film has a thickness of 25 to 550 µm.

20. A multilayer film laminate (i) as defined in any preceding claim, preferably a coextruded multilayer film laminate (i), more preferably a coextruded non-oriented multilayer film laminate (i), for lamination to a substrate for forming a laminated film.

21. A process for preparation of a multilayer film laminate (i) as defined in any preceding claim, wherein said multilayer film laminate (i) is formed by coextrusion of a polymer compositions for a layer (A), layer (C) and for optional layer(s) to form a coextruded film laminate (i), preferably to form a coextruded film laminate (i) selected from
- a coextruded (A/C)-layer laminate (i), wherein layer (A) and layer (C) are as defined in any preceding claim or
- a coextruded (A/B/C)-layer laminate (i), wherein layer (A), layer (B) and layer (C) are as defined in any preceding claim.

22. A process for preparation of a laminated multilayer film as defined in any preceding claim, wherein
- a multilayer film laminate (i) is laminated on a substrate (ii) to form a laminated film, preferably to form a laminated multilayer film selected from a layer structure, in the given layer order,
- ((C/A)-layer film laminate (i))/(substrate (ii)), wherein (C/A)-layer film laminate (i) and substrate (ii) are as defined in any preceding claim, or
- ((C/B/A)-layer film laminate (i))/(substrate (ii)), wherein (C/B/A)-layer film laminate (i) and substrate (ii) are as defined in any preceding claim.

23. An article comprising a laminated multilayer film as defined in any preceding claim.

24. The article as defined in claim 23, which is a food, non-food including cosmetic and medical packaging article.
